# EUROPÄISCHE PATENTSCHRIFT

(11) **EP 1 751 918 B1**
(45) Veröffentlichungstag und Bekanntmachung des Hinweises auf die Patenterteilung: **10.10.2007**
(21) Anmeldenummer: 05773952.6
(22) Anmeldetag: 31.05.2005
(51) Int. Cl.: H04L 12/24

(54) **VERFAHREN UND COMPUTER ZUR KONFIGURATION EINES KOMMUNIKATIONSKNOTENS**
METHOD AND COMPUTER FOR CONFIGURATION OF A COMMUNICATION NODE
PROCEDE ET ORDINATEUR PERMETTANT DE CONFIGURER UN NOEUD DE COMMUNICATION

(30) Priorität: 03.06.2004 DE 102004027126
(43) Veröffentlichungstag der Anmeldung: 14.02.2007
(73) Patentinhaber: SIEMENS AKTIENGESELLSCHAFT, 80333 München (DE)
(72) Erfinder: SCHIFFER, Wolfgang, 52134 Herzogenrath (DE)
(86) Internationale Anmeldenummer: PCT/EP2005/052484
(87) Internationale Veröffentlichungsnummer: WO 2005/119966

(56) Entgegenhaltungen:
- EP-A- 0 791 880
- WO-A-01/98930
- WO-A-02/087157

## Beschreibung

Die Erfindung betrifft ein Verfahren zur Konfiguration eines Kommunikationsknotens gemäß des Oberbegriffs des Patentanspruchs 1 und einen Computer zur Konfiguration eines Kommunikationsknotens gemäß des Oberbegriffs des Patentanspruchs 8.

In Kommunikationsknoten eingehende Nachrichten oder Kommunikationsverbindungen werden in diesen anhand von Kommunikationsadressen verarbeitet bzw. weitergeleitet. Wenn als Kommunikationsknoten beispielsweise eine Telefonanlage ("Vermittlungssystem") verwendet wird, wird ein eingehender Telefonanruf oder eine eingehende Telefax-Verbindung anhand einer (Durchwahl-)Rufnummer zu dem gewünschten Endgerät vermittelt. Analog dazu werden in Kommunikationsknoten, die zur Verarbeitung elektronischer Nachrichten (E-Mail) bestimmt sind, die elektronischen Nachrichten anhand der zugeordneten Empfänger-Kommunikationsadressen (E-Mail-Adressen) an das zugeordnete Empfänger-Postfach weitergeleitet.

In die Kommunikationsknoten können Befehle (betriebstechnische Aufträge) eingegeben werden, durch die diese Kommunikationsknoten derart konfiguriert werden, dass mit bestimmten eingehenden Nachrichten bzw. Kommunikationsverbindungen auf eine besondere Weise verfahren wird. Eine solche Konfiguration kann beispielsweise bestimmen, dass eine eingehende Kommunikationsverbindung (Telefonanruf, Telefax-Nachricht) an ein anderes Kommunikationsendgerät weitergeleitet ("Anrufumleitung") wird, oder aber auch - im Fall der E-Mail-Systeme - dass eine eingehende E-Mail-Nachricht eines bestimmten Absenders (Absender-Kommunikationsadresse) umzuleiten oder auf besondere Weise zu beantworten ist ("E-Mail-Weiterleitung", "Auto-Reply").

Für eine derartige Konfiguration der Kommunikationsknoten werden entsprechende betriebstechnische Aufträge von einem Benutzer erstellt und zu den betroffenen Kommunikationsknoten übermittelt. Bei den Telefon-Vermittlungssystemen können die betriebstechnischen Aufträge beispielsweise durch Eingeben einer Ziffernfolge an einem Kommunikationsendgerät eingegeben werden. Ein anderer Weg ist die Verwendung computergestützter Benutzeroberflächen (sog. "Administrations-Tools"), die beispielsweise als Teil einer CTI-Anwendung (CTI = Computer Telephonie Integration) die Bearbeitung von Listen erlauben, die in dem Kommunikationsknoten (Vermittlungssystem) gespeichert sind und die beispielsweise bestimmen, in welcher Weise eine eingehende Kommunikationsverbindung eines bestimmten Anrufers verarbeitet werden soll.

Auch die E-Mail-Systeme lassen sich mit Hilfe betriebstechnischer Aufträge konfigurieren, wobei auch in den E-Mail-Systemen in Listen oder ähnlichen Datenstrukturen Angaben gespeichert sind, die die Konfiguration beschreiben. Zur Erstellung bzw. Bearbeitung solcher Listen (und damit der Konfiguration) werden als Hilfsmittel häufig sog. Regel-Assistenten ("Wizards") verwendet, bei denen durch einen programmgeführten Abfragevorgang von einem Benutzer die zur Konfiguration notwendigen Informationen abgefragt werden. Dabei kann ein Benutzer beispielsweise definieren, dass die elektronischen Nachrichten eines bestimmten Absenders in einem speziellen Postfach oder in einem speziellen Ordner abgelegt werden sollen. Diese Informationen werden durch den "Wizard" in einen betriebstechnischen Auftrag umgesetzt, also in eine Befehlsfolge, durch die in einer Liste (Zuordnungsliste) des Kommunikationsknotens der entsprechende Auftrag und seine Parameter eingetragen (konfiguriert) wird.

Weiterhin offenbart Dokument WO 01/98930 A ein System für das Design der Konfiguration eines Netzwerkes, welches Drag&Drop von vordefinierten Icons benutzt. Das Platzieren von Netzelementen als auch die Konfiguration von Verbindungen zwischen diesen ist unter anderem mit Drag&Drop auf einer graphischen Benutzeroberfläche realisiert.

Bei den bekannten Verfahren und Anordnungen zur Konfiguration von Kommunikationsknoten hat sich als nachteilig erwiesen, dass die Eingabe und die Änderung der betriebstechnischen Aufträge häufig umständlich und zeitaufwendig ist. Insbesondere für ungeübte Benutzer stellt die Konfiguration der Kommunikationsknoten einen sehr komplexen, zeitaufwändigen Vorgang dar.

Es ist daher eine Aufgabe der vorliegenden Erfindung, die Konfiguration von Kommunikationsknoten zu vereinfachen, so dass eine schnelle, einfache und sichere Bedienbarkeit gegeben ist.

Die Aufgabe wird für das Verfahren durch die Merkmale des Patentanspruchs 1 und für den Computer durch die Merkmale des Patentanspruchs 8 gelöst.

Die Lösung sieht ein Verfahren zur Konfiguration eines Kommunikationsknotens vor, wobei der Kommunikationsknoten mittels betriebstechnischer Aufträge einer auf einem Computer installierten Kommunikationsanwendung konfiguriert wird, und wobei zur Konfiguration zumindest eine Kommunikationsadresse mit zumindest einer von mehreren auswählbaren Anweisungen verknüpft wird. Dabei werden die auswählbaren Anweisungen auf der Benutzeroberfläche visualisiert, die zumindest eine Kommunikationsadresse wird durch ein auf graphischen Benutzeroberfläche verschiebbares Element dargestellt, das Element wird durch ein Auswahlmittel zu einer ausgewählten der visualisierten Anweisungen verschoben und dort freigebeben, die zumindest eine durch das Element dargestellte Kommunikationsadresse wird mit der ausgewählten Anweisung verknüpft, und durch die Kommunikationsanwendung wird der Kommunikationsknoten konfiguriert, indem durch die Kommunikationsanwendung anhand der zumindest einen Kommunikationsadresse und der mit dieser verknüpften Anweisung ein betriebstechnischer Auftrag erstellt, zu dem Kommunikationsknoten übermittelt und zu dessen Konfiguration verwendet wird. Durch dieses Verfahren wird der Kommunikationsknoten konfiguriert, indem in einfacher Weise ein graphisches Element, beispielsweise ein Icon oder ein Name, auf der graphischen Benutzeroberfläche verschoben ("Drag'n'Drop") wird. Das Verschieben von Objekten auf einer graphischen Benutzeroberfläche stellt dabei einen gewohnten Bedienvorgang dar, wodurch die Benutzung des Verfahrens sehr leicht und intuitiv erlernbar bzw. durchführbar ist. Dadurch, dass der Benutzer nur einen Bedienschritt durchführt, ist die Konfiguration besonders schnell durchzuführen.

Die Lösung der Aufgabe sieht weiter einen Computer zur Konfiguration eines Kommunikationsknotens vor, wobei der Computer mit einer installierten Kommunikationsanwendung ausgestattet und zur Übermittlung betriebstechnischer Aufträge zu dem Kommunikationsknoten eingerichtet ist, wobei die installierte Kommunikationsanwendung zur Verknüpfung zumindest einer Kommunikationsadresse mit Anweisungen ausgebildet und zur Umsetzung der Verknüpfung in einen der betriebstechnischen Aufträge eingerichtet ist. Dabei ist der Computer mit einer graphischen Benutzeroberfläche zur Visualisierung der ausführbaren Anweisungen ausgestattet, die Benutzeroberfläche zur Darstellung zumindest einer Kommunikationsadresse durch ein auf der graphischen Benutzeroberfläche verschiebbares Element eingerichtet, das Element durch ein Auswahlmittel zu einer ausgewählten der visualisierten Anweisungen verschiebbar und dort freigebbar, die installierte Kommunikationsanwendung zur Verknüpfung der zumindest einen durch das Element dargestellten Kommunikationsadresse mit der ausgewählten Anweisung eingerichtet, und die Kommunikationsanwendung zur Erstellung des betriebstechnischen Auftrages anhand der Verknüpfung und zur Übermittlung des betriebstechnischen Auftrages zu dem Kommunikationsknoten ausgebildet. Durch den derart ausgestatteten Computer ist die Konfiguration des Kommunikationsknotens auf einfache, schnelle, sichere und intuitiv erlernbare Weise zu bewerkstelligen.

Das Verfahren ist durch die Merkmale der abhängigen Patentansprüche 2 bis 7 vorteilhaft weiter ausgestaltet. Die dabei beschriebenen Merkmale und Vorteile gelten sinngemäß auch für den erfindungsgemäßen Computer.

Mit dem Verfahren können besonders einfach die häufigsten vorgenommenen Konfigurationen von Kommunikationsknoten durchgeführt werden, indem die Anweisung die Behandlung zumindest einer zukünftig eingehenden Kommunikationsverbindung und/oder Nachricht bestimmt. Dabei werden besonders wichtige betriebstechnische Aufträge abgedeckt, indem als auswählbare Anweisung eine Anrufweiterschaltung, eine E-Mail-Weiterleitung, eine Erstellung einer automatisierten Antwort und/oder eine Sperre der zumindest einen zukünftig eingehenden Kommunikationsverbindung und/oder Nachricht verwendet wird.

Die Durchführung des Verfahrens und somit die Bedienung des entsprechenden Computers wird weiter vereinfacht, wenn als das Element eine angezeigte Kommunikationsadresse, ein angezeigter Eintrag eines Adressenverzeichnisses oder ein zumindest eine Kommunikationsadresse enthaltendes elektronisches Dokument verwendet wird. Dabei wird vorteilhaft das Dokument durch ein graphisches, verschiebbares Symbol repräsentiert.

Eine für die meisten Benutzer gewohnte Bedienung ergibt sich, indem als das Auswahlmittel ein Mouse-Zeiger einer Computer-Mouse verwendet wird. Dabei werden vorteilhaft die auswählbaren Anweisungen durch Schriftzüge, Schaltflächen oder Symbole gebildet; gleiches gilt für die zu verschiebenden Elemente. Dabei können alternativ auch die Anweisungen als verschiebbare Elemente ausgebildet sein, die dann per "Drag'n'Drop" auf die Kommunikationsadresse (bzw. Kommunikationsadressen) "gezogen" werden.

Zur Änderung bzw. zum Wiederruf eingegebener betriebstechnischer Aufträge (Anweisungen, Kommandos) werden keine weiteren, separaten Anweisungen oder Verfahrensschritte benötigt, wenn das Element durch das Auswahlmittel erneut zu den ausgewählten visualisierten Anweisungen verschoben und dort freigegeben wird, wobei die Verknüpfung zwischen der durch das Element dargestellten Kommunikationsadresse und der ausgewählten Anweisung aufgehoben wird und durch die Kommunikationsanwendung der Kommunikationsknoten erneut konfiguriert wird, indem die Kommunikationsanwendung anhand der aufgehobenen Verknüpfung eine weitere betriebstechnische Anweisung erstellt und zu dem Kommunikationsknoten übermittelt.

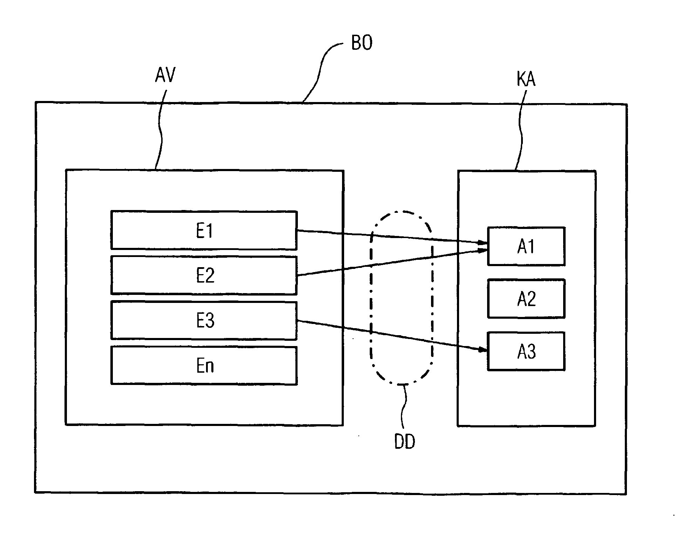

Ausführungsbeispiele des erfindungsgemäßen Verfahrens werden nachfolgend anhand der Zeichnung erläutert und dienen gleichzeitig der Erläuterung eines Ausführungsbeispiels eines erfindungsgemäßen Computers. Dabei zeigt die einzige Figur die Benutzeroberfläche eines Computers, auf der in Anzeigefenstern eine Kommunikationsanwendung und ein Adressenverzeichnis angeordnet sind.

In der Figur ist die graphische Benutzeroberfläche BO eines (nicht dargestellten) Computers gezeigt, auf der die Anzeigefenster eines Adressverzeichnisses AV und einer Kommunikationsanwendung KA angezeigt werden. Die auf der Benutzeroberfläche BO angezeigten Programme, Objekte, Elemente etc., also auch das Adressverzeichnis AV und die Kommunikationsanwendung KA, werden im wesentlichen durch ein graphisches Auswahlmittel, hier mit dem Mouse-Zeiger einer Computer-Mouse, bedient. An dem Computer sind mehrere Kommunikationsknoten, ebenfalls nicht dargestellt, angeschlossen, wobei die Kommunikationsknoten durch die Kommunikationsanwendung KA gesteuert bzw. konfiguriert werden. Die Konfiguration der Kommunikationsknoten geschieht dabei mit Hilfe betriebstechnischer Aufträge, das sind Kommandos, die von der Kommunikationsanwendung KA zu dem jeweils zu konfigurierenden Kommunikationsknoten übermittelt werden.

Im Folgenden wird die Konfiguration eines der Kommunikationsknoten exemplarisch beschrieben, wobei dieser zu konfigurierende Kommunikationsknoten ein sog. Gatekeeper in einer Sprachdaten-Kommunikationsanordnung (VoIP-Netzwerk; VoIP = Voice over Internet Protocol) ist. Ziel der Konfiguration ist, die bei dem Kommunikationsknoten eingehenden Kommunikationsverbindungen (z.B. Telefonanrufe) eines bestimmten Anrufers zu dem Mobilfunkanschluss eines Benutzers des Computers weiterzuschalten. Dazu wird der Kommunikationsknoten derart konfiguriert, dass die Kommunikationsadressen (Rufnummerninformation) eingehender Kommunikationsverbindungen ("CLIP" = Calling Line Presentation) ausgewertet werden und bei Übereinstimmung mit einer zuvor definierten Kommunikationsadresse (Rufnummer) die entsprechende Aktion ausgeführt wird, hier also die Anrufweiterschaltung zu dem vordefinierten Mobilfunkanschluss. Selbstverständlich können auch andere Funktionen auf die nachfolgend beschriebene Art und Weise konfiguriert werden.

In dem Adressverzeichnis AV sind mehrere Einträge E1, E2, E3, En aufgeführt, die jeweils mit einem Adressdatensatz in einer dem Adressverzeichnis AV zugrunde liegenden Adressdatenbank logisch verknüpft sind. Die Einträge E1, E2, E3, En bestehen in ihrer Visualisierung jeweils aus einem Adressen-Name, der mit Hilfe des Mouse-Zeigers (Auswahlmittel) verschoben und freigegeben werden kann. Dieser Vorgang wird auch als "Drag'n'Drop" DD bezeichnet. Selbstverständlich können zur Visualisierung auch Symbole ("Icons") oder andere Elemente verwendet werden. Das Fenster mit der Kommunikationsanwendung KA zeigt verschiedene symbolhaft visualisierte Anweisungen A1, A2, A3, wobei im vorliegenden Ausführungsbeispiel die Anweisung A1 die Anrufweiterschaltung zu einem vordefinierten Mobilfunkanschluss des Benutzers betrifft, die Anweisung A2 die Sperre ("Abweisen") eingehender Kommunikationsverbindungen und Nachrichten betrifft, und schließlich die Anweisung A3 die Weiterleitung eingehender E-Mail-Nachrichten an ein vordefiniertes E-Mail-Postfach einer dritten Person betrifft.

Zur Konfiguration des Kommunikationsknotens (hier also des Gatekeepers) zieht der Benutzer mit Hilfe des Mouse-Zeigers den Eintrag E1 aus dem Adressverzeichnis AV zu der ausgewählten Anweisung A1 der Kommunikationsanwendung KA und gibt dort (beispielsweise durch Loslassen einer Mouse-Taste) das verschiebbare Element, nämlich den Eintrag E1 (Adressen-Name), auf dem Symbol der Anweisung A1 frei. Dadurch erkennt das der Kommunikationsanwendung KA zugrunde liegende Computer-Programm die Verknüpfung des Eintrages E1 mit der Anweisung A1, wobei von der Kommunikationsanwendung KA der im Eintrag E1 zugeordnete Adressdatensatz aus der Adressdatenbank abgerufen und analysiert wird. Bei der Analyse ergibt sich, dass dem Eintrag E1 als Kommunikationsadressen eine Rufnummerninformation ("Telefonnummer") und eine E-Mail-Adresse zugeordnet sind. Da es sich bei der Anweisung A1 um eine Anweisung zur Weiterschaltung von Kommunikationsverbindungen, also von Telefonanrufen und Faxnachrichten, handelt, verknüpft die Kommunikationsanwendung KA die dem Eintrag E1 zugeordnete Rufnummerninformation als Kommunikationsadresse mit der Anweisung A1. Anhand dieser Verknüpfung erstellt die Kommunikationsanwendung KA nun einen betriebstechnischen Auftrag, also eine Befehlsfolge, die neben der Anweisung "Anrufweiterschaltung" als Parameter die verknüpfte Kommunikationsadresse (Rufnummerninformation aus Eintrag E1) und als "Zieladresse" die Rufnummer des Mobilfunkanschlusses des Benutzers umfasst. Dieser betriebstechnische Auftrag wird von der Kommunikationsanwendung KA über die dem Computer eigenen Kommunikationsmittel (z. B. Netzwerk-Interface) zu dem angeschlossenen Kommunikationsknoten (Gatekeeper) versendet, wodurch der Kommunikationsknoten in gewünschter Weise konfiguriert wird. Diese vorgenommene Konfiguration wird außerdem in einem der Kommunikationsanwendung KA zugeordneten Speicher registriert.

Um die derart vorgenommene Konfiguration des Kommunikationsknotens rückgängig zu machen, um also die Anrufweiterschaltung zu dem Mobilfunkanschluss zu beenden, führt der Benutzer die gleiche "Drag'n'Drop"-Aktion DD erneut durch. Aufgrund der in dem Speicher der Kommunikationsanwendung KA registrierten Informationen erkennt die Kommunikationsanwendung KA, dass die Verknüpfung des Eintrages E1 bzw. einer mit dem Eintrag E1 korrelierten Kommunikationsadresse mit der Anweisung A1 bereits in dem Kommunikationsknoten konfiguriert ist. Die Kommunikationsanwendung KA veranlasst daher die Anzeige eines Meldungsfensters auf der Benutzeroberfläche BO, durch welches dem Benutzer mitgeteilt wird, dass eine entsprechende Konfiguration bereits besteht, und wobei abgefragt wird, ob diese Konfiguration beibehalten oder aufgehoben werden soll. Sofern sich der Benutzer dabei für die Aufhebung der Konfiguration entscheidet, erstellt die Kommunikationsanwendung KA einen neuen betriebstechnischen Auftrag, der zu dem Kommunikationsknoten übermittelt wird und der zu der gewünschten Änderung der Konfiguration des Kommunikationsknoten führt.

Im Folgenden wird anhand eines weiteren Ausführungsbeispiels die Konfiguration eines weiteren Kommunikationsknotens beschrieben. Der hier zu konfigurierende Kommunikationsknoten ist ein Server zur Verarbeitung elektronischer Post, ein sog. E-Mail-Server. Der E-Mail-Server wird mit der gleichen Kommunikationsanwendung KA konfiguriert, die auch zu der Konfiguration des Gatekeepers verwendet wird. Bei der Kommunikationsanwendung KA handelt es sich um ein sog. "Unified-Messaging-System", bei dem verschiedene Kommunikationsdienste, beispielsweise Anrufbeantworter, E-Mail-Dienst und Telefax-Dienst, mittels einer gemeinsamen Benutzeroberfläche (Anzeigefenster) zusammengeführt dem Benutzer angeboten werden.

Analog zu dem Vorgehen in dem zuvor geschilderten Ausführungsbeispiel zieht der Benutzer im "Drag'n'Drop" DD-Verfahren ein auf der Benutzeroberfläche BO symbolhaft dargestelltes Dokument auf die Anweisung A3 der Kommunikationsanwendung KA. Das symbolhaft dargestellte Dokument ist hierbei ein Textdokument, welches einen Brief enthält. Dieses Textdokument wird von der Kommunikationsanwendung KA unter Nutzung eines auf dem Computer installierten Textverarbeitungsprogramms geöffnet und nach Kommunikationsadressen durchsucht, die mit der Anweisung A3 nutzbar sind. Da es sich bei der Anweisung A3 um eine Anweisung zu einer E-Mail-Weiterleitung handelt, durchsucht die Kommunikationsanwendung KA den Brief nach Zeichenfolgen des Formats "XYZ@abc.de" und findet dabei eine E-Mail-Adresse.

In den Fällen, in denen von der Kommunikationsanwendung KA mehrere passende Kommunikationsadressen aufgefunden werden, stellt die Kommunikationsanwendung KA die aufgefundenen Kommunikationsadressen dem Benutzer zur Auswahl in einem Bildschirmfenster dar.

Die aufgefundene Kommunikationsadresse wird nun mit der Anweisung A3 verknüpft und in einen entsprechenden betriebstechnischen Auftrag für den Kommunikationsknoten E-Mail-Server umgesetzt. Der betriebstechnische Auftrag wird danach zu dem Kommunikationsknoten versendet und dort zur Konfigurierung des Kommunikationsknotens benutzt. Dadurch ist der Kommunikationsknoten nun derart konfiguriert, dass alle eingehenden Nachrichten (E-Mails) zu der aufgefundenen Kommunikationsadresse weitergeleitet werden. Alternativ kann die Anweisung A3 auch derart ausgestaltet sein, dass nur diejenigen eingehenden Nachrichten weitergeleitet werden, die als Absenderadresse die aufgefundene Kommunikationsadresse aufweisen. Dann muss jedoch in der Kommunikationsanwendung KA die Zieladresse (E-Mail-Adresse) für die weiterzuleitenden Nachrichten definiert werden.

Alternativ oder zusätzlich zu dem vorstehend beschriebenen "Drag'n'Drop" DD-Verfahren kann die Kommunikationsanwendung auch so eingestellt werden, dass ein "Ziehen" der Symbole bzw. Schaltflächen, die die Anweisungen A1, A2, A3 darstellen, auf die Einträge E1, E2, E3, En erfolgen kann, wodurch ebenso die Konfiguration der Kommunikationsknoten gestartet wird.

Die Kommunikationsanwendung KA ist - wie bereits beschrieben - derart ausgestaltet, dass zur Ermittlung passender Kommunikationsadressen automatisch ein Zugriff auf Adressdatenbanken, beispielsweise auf die dem Adressverzeichnis AV zugrunde liegende Adressdatenbank erfolgt. Wird dabei beispielsweise mittels des "Drag'n'Drop" DD -Verfahrens eine E-Mail-Nachricht, die keine Rufnummerninformation umfasst, auf die Anweisung A1 gezogen, greift die Kommunikationsanwendung KA auf die Adressdatenbank des Adressverzeichnisses AV zu, um anhand der in der E-Mail-Nachricht enthaltenen E-Mail-Adresse einen dem gleichen Benutzer zugeordneten Eintrag in der dem Adressenverzeichnis AV zugrunde liegenden Datenbank auszulesen und daraus die Rufnummerninformation zu gewinnen. Diese Rufnummerninformation wird dann mit der ausgewählten Anweisung A1 verknüpft, wodurch ein neuer betriebstechnischer Auftrag generiert und zur Konfiguration an den Kommunikationsknoten (Gatekeeper) übermittelt wird.

## Patentansprüche

1. Verfahren zur Konfiguration eines Kommunikationsknotens,
- wobei der Kommunikationsknoten mittels betriebstechnischer Aufträge einer auf einem Computer installierten Kommunikationsanwendung (KA) konfiguriert wird, und
- wobei zur Konfiguration zumindest eine Kommunikationsadresse mit zumindest einer von mehreren auswählbaren Anweisungen (A1, A2, A3) verknüpft wird;
**dadurch gekennzeichnet, dass**
- die auswählbaren Anweisungen (A1, A2, A3) auf einer Benutzeroberfläche (BO) visualisiert werden,
- die zumindest eine Kommunikationsadresse durch ein auf der graphischen Benutzeroberfläche verschiebbares Element (E1, E2, E3, En) dargestellt wird,
- das Element (E1, E2, E3) durch ein Auswahlmittel zu einer ausgewählten der visualisierten Anweisungen (A1, A2, A3) verschoben und dort freigegeben wird,
- die zumindest eine durch das Element (E1, E2, E3, En) dargestellte Kommunikationsdresse mit der ausgewählten Anweisung (A1, A2, A3) verknüpft wird, und
- durch die Kommunikationsanwendung (KA) der Kommunikationsknoten konfiguriert wird, indem durch die Kommunikationsanwendung (KA) anhand der zumindest einen Kommunikationsadresse und der mit dieser verknüpften Anweisung (A1, A2, A3) ein betriebstechnischer Auftrag erstellt, zu dem Kommunikationsknoten übermittelt und zu dessen Konfiguration verwendet wird.

2. Verfahren nach Patentanspruch 1,
**dadurch gekennzeichnet, dass**
durch die Anweisung (A1, A2, A3) die Behandlung zumindest einer zukünftig eingehenden Kommunikationsverbindung und/oder Nachricht bestimmt wird.

3. Verfahren nach Patentanspruch 2,
**dadurch gekennzeichnet, dass**
als auswählbare Anweisung (A1, A2, A3) eine Anrufweiterschaltung, eine E-Mail-Weiterleitung, eine Erstellung einer automatisierten Antwort und/oder eine Sperre der zumindest einen zukünftig eingehenden Kommunikationsverbindung und/oder Nachricht verwendet wird.

4. Verfahren nach einem der vorhergehenden Patentansprüche,
**dadurch gekennzeichnet, dass**
als das Element (E1, E2, E3, En) eine angezeigte Kommunikationsadresse, ein angezeigter Eintrag eines Adressenverzeichnisses (AV) oder ein zumindest eine Kömmunikationsadresse enthaltendes Dokument verwendet wird.

5. Verfahren nach einem der vorhergehenden Patentansprüche,
**dadurch gekennzeichnet, dass**
als das Auswahlmittel ein Mouse-Zeiger einer Computer-Mouse verwendet wird.

6. Verfahren nach einem der vorhergehenden Patentansprüche,
**dadurch gekennzeichnet, dass**
die auswählbaren Anweisungen (A1, A2, A3) durch Schriftzüge, Schaltflächen oder Symbole gebildet werden.

7. Verfahren nach einem der vorhergehenden Patentansprüche,
**dadurch gekennzeichnet, dass**
das Element (E1, E2, E3, En) durch das Auswahlmittel erneut zu der ausgewählten visualisierten Anweisung (A1, A2, A3) verschoben und dort freigegeben wird, wobei
die Verknüpfung zwischen der durch das Element (E1, E2, E3, En) dargestellte Kommunikationsdresse und der ausgewählten Anweisung (A1, A2, A3) aufgehoben wird und
durch die Kommunikationsanwendung (KA) der Kommunikationsknoten erneut konfiguriert wird, indem die Kommunikationsanwendung (KA) anhand der aufgehobenen Verknüpfung eine weitere betriebstechnische Anweisung erstellt und zu dem Kommunikationsknoten übermittelt.

8. Computer zur Konfiguration eines Kommunikationsknotens,
wobei der Computer mit einer installierten Kommunikationsanwendung ausgestattet und zur Übermittlung betriebstechnischer Aufträge zu dem Kommunikationsknoten eingerichtet ist,
wobei die installierte Kommunikationsanwendung (KA) zur Verknüpfung zumindest einer Kommunikationsadresse mit Anweisungen (A1, A2, A3) ausgebildet und zur Umsetzung der Verknüpfung in einen der betriebstechnischen Aufträge eingerichtet ist,
**dadurch gekennzeichnet, dass**
der Computer mit einer graphischen Benutzeroberfläche (BO) zur Visualisierung der auswählbaren Anweisungen (A1, A2, A3) ausgestattet ist,
die Benutzeroberfläche (BO) zur Darstellung zumindest einer Kommunikationsadresse durch ein auf der graphischen Benutzeroberfläche (BO) verschiebbares Element (E1, E2, E3, En) eingerichtet ist,
das Element (E1, E2, E3, En) durch ein Auswahlmittel zu einer ausgewählten der visualisierten Anweisungen (A1, A2, A3) verschiebbar und dort freigebbar ist,
die installierte Kommunikationsanwendung (KA) zur Verknüpfung der zumindest einen durch das Element (E1, E2, E3, En) dargestellten Kommunikationsdresse mit der ausgewählten Anweisung (A1, A2, A3) eingerichtet ist, und
die Kommunikationsanwendung (KA) zur Erstellung des betriebstechnischen Auftrages anhand der Verknüpfung und zur Übermittlung des betriebstechnischen Auftrages zu dem Kommunikationsknoten ausgebildet ist.

## Claims

1. Method for configuring a communication node,
- where the communication node is configured using operational orders from a communication application (KA) installed on a computer, and
- where configuration is effected by logically combining at least one communication address with at least one of a plurality of selectable instructions (A1, A2, A3),
**characterized in that**
- the selectable instructions (A1, A2, A3) are visually displayed on a user interface (BO),
- the at least one communication address is shown by an element (E1, E2, E3, En) which can be moved on the graphical user interface,
- the element (E1, E2, E3) is moved by a selection means to a selected instance of the visually displayed instructions (A1, A2, A3) and is enabled there,
- the at least one communication address shown by the element (E1, E2, E3, En) is logically combined with the selected instruction (A1, A2, A3), and
- the communication application (KA) configures the communication node by virtue of the communication application (KA) using the at least one communication address and the instruction (A1, A2, A3) logically combined therewith to create an operational order, transmitting it to the communication node and using it to configure the latter.

2. Method according to patent claim 1,
**characterized in that**
the instruction (A1, A2, A3) determines the treatment of at least one communication link and/or message arriving in the future.

3. Method according to patent claim 2,
**characterized in that**
the selectable instruction (A1, A2, A3) used is call forwarding, e-mail forwarding, creation of an automated response and/or a block on the at least one communication link and/or message arriving in the future.

4. Method according to one of the preceding patent claims,
**characterized in that**
the element (E1, E2, E3, En) used is a displayed communication address, a displayed entry in an address directory (AV) or a document containing at least one communication address.

5. Method according to one of the preceding patent claims,
**characterized in that**
the selection means used is a mouse pointer of a computer mouse.

6. Method according to one of the preceding patent claims,
**characterized in that**
the selectable instructions (A1, A2, A3) are formed by logos, buttons or symbols.

7. Method according to one of the preceding patent claims,
**characterized in that**
the element (E1, E2, E3, En) is moved by the selection means to the selected visually displayed instruction (A1, A2, A3) again and is enabled there, with
the logic combination between the communication address shown by the element (E1, E2, E3, En) and the selected instruction (A1, A2, A3) being cancelled and the communication application (KA) configuring the communication node again by virtue of the communication application (KA) using the cancelled logic combination to create a further operational instruction and transmitting to the communication node.

8. Computer for configuring a communication node, where the computer is equipped with an installed communication application and is set up to transmit operational orders to the communication node,
the installed communication application (KA) being designed to logically combine at least one communication address with instructions (A1, A2, A3) and being set up to convert the logic combination into one of the operational orders,
**characterized in that**
the computer is equipped with a graphical user interface (BO) for visually displaying the selectable instructions (A1, A2, A3),
the user interface (BO) is set up to show at least one communication address using an element (E1, E2, E3, En) which can be moved on the graphical user interface (BO),
the element (E1, E2, E3, En) can be moved by a selection means to a selected instance of the visually displayed instructions (A1, A2, A3) and can be enabled there,
the installed communication application (KA) is set up to logically combine the at least one communication address shown by the element (E1, E2, E3, En) with the selected instruction (A1, A2, A3), and
the communication application (KA) is designed to create the operational order using the logic combination and to transmit the operational order to the communication node.

## Revendications

1. Procédé de configuration d'un noeud de communication,
- dans lequel on configure le noeud de communication au moyen de tâches techniques d'exploitation d'une application dé communication (KA) installée sur un ordinateur, et
- pour la configuration, on combine au moins une adresse de communication avec au moins une instruction parmi plusieurs instructions sélectionnables (A1, A2, A3),
**caractérisé par le fait que**
- les instructions sélectionnables (A1, A2, A3) sont visualisées sur une interface d'utilisateur (BO),
- la - au moins une - adresse de communication est représentée par un élément (E1, E2, E3, En) déplaçable sur l'interface d'utilisateur graphique,
- l'élément (E1, E2, E3) est déplacé par un moyen de sélection vers une instruction sélectionnée parmi les instructions visualisées (A1, A2, A3) où il est débloqué,
- la - au moins une - adresse de communication représentée par l'élément (E1, E2, E3, En) est combinée avec l'instruction sélectionnée (A1, A2, A3), et
- le noeud de communication est configuré par l'application de communication (KA) **par le fait qu'**une tâche technique d'exploitation est créée par l'application de communication (KA) à l'aide de la - au moins une - adresse de communication et de l'instruction (A1, A2, A3) combinée avec celle-ci, est transmise au noeud de communication et est utilisée pour la configuration de celui-ci.

2. Procédé selon la revendication 1,
**caractérisé par le fait que** le traitement d'au moins une liaison de communication et/ou d'un message arrivant ultérieurement est déterminé par l'instruction (A1, A2, A3).

3. Procédé selon la revendication 2,
**caractérisé par le fait que**, comme instruction sélectionnable (A1, A2, A3), on utilise un transfert d'appel, une retransmission de courriel, une création de réponse automatisée et/ou un blocage de la ou des liaisons de communication et/ou du ou des messages arrivant ultérieurement.

4. Procédé selon l'une des revendications précédentes,
**caractérisé par le fait que** l'on utilise comme élément (E1, E2, E3, En) une adresse de communication affichée, un enregistrement affiché d'un répertoire d'adresses (AV) ou un document contenant au moins une adresse de communication.

5. Procédé selon l'une des revendications précédentes,
**caractérisé par le fait que** l'on utilise comme moyen de sélection un pointeur d'une souris d'ordinateur.

6. Procédé selon l'une des revendications précédentes,
**caractérisé par le fait que** les instructions sélectionnables (A1, A2, A3) sont formées par des informations écrites, des surfaces de commutation ou des symboles.

7. Procédé selon l'une des revendications précédentes,
**caractérisé par le fait que**
l'élément (E1, E2, E3, En) est à nouveau déplacé par le moyen de sélection vers l'instruction visualisée sélectionnée (A1, A2, A3) où il est débloqué,
la combinaison entre l'adresse de communication représentée par l'élément (E1, E2, E3, En) et l'instruction sélectionnée (A1, A2, A3) est supprimée, et
l'application de communication (KA) configure à nouveau le noeud de communication **par le fait que** l'application de communication (KA) crée à l'aide de la combinaison supprimée une autre instruction technique d'exploitation et la transmet au noeud de communication.

8. Ordinateur pour la configuration d'un noeud de communication,
l'ordinateur étant équipé d'une application de communication installée et étant conçu pour la transmission de tâches techniques d'exploitation au noeud de communication
et l'application de communication installée (KA) étant conçue pour la combinaison d'au moins une adresse de communication avec des instructions (A1, A2, A3) et pour la transformation de la combinaison en l'une des tâches techniques d'exploitation,
**caractérisé par le fait que**
l'ordinateur est équipé d'une interface d'utilisateur graphique (BO) pour la visualisation des instructions sélectionnables (A1, A2, A3),
l'interface d'utilisateur (BO) est conçue pour la représentation d'au moins une adresse de communication par un élément (E1, E2, E3, En) déplaçable sur l'interface d'utilisateur graphique (BO),
l'élément (E1, E2, E3, En) est déplaçable par un moyen de sélection vers une instruction sélectionnée parmi les instructions visualisées (A1, A2, A3) où il est déblocable,
l'application de communication installée (KA) est conçue pour la combinaison de la - au moins une - adresse de communication représentée par l'élément (E1, E2, E3, En) avec l'instruction sélectionnée (A1, A2, A3), et
l'application de communication (KA) est conçue pour la création de la tâche technique d'exploitation à l'aide de la combinaison et pour la transmission de la tâche technique d'exploitation au noeud de communication.
